## Europäisches Patentamt
## European Patent Office
## Office européen des brevets

(19)

(11) Numéro de publication: **0 145 584**
**B1**

(12)

# FASCICULE DE BREVET EUROPÉEN

(45) Date de publication du fascicule du brevet: 29.04.87

(51) Int. Cl.⁴: **B 01 J 37/02, B 01 J 23/54, B 01 D 53/34, B 01 D 53/36**

(21) Numéro de dépôt: 84402455.4

(22) Date de dépôt: 30.11.84

(54) Procédé catalytique pour le traitement des gaz d'échappement.

(30) Priorité: 09.12.83 FR 8319728

(43) Date de publication de la demande: 19.06.85 Bulletin 85/25

(45) Mention de la délivrance du brevet: 29.04.87 Bulletin 87/18

(84) Etats contractants désignés: AT BE CH DE FR GB IT LI NL

(56) Documents cité:
EP-A-0 073 703
FR-A-2 527 197
GB-A-1 558 167
GB-A-1 590 436
US-A-4 145 316

(73) Titulaire: Société Française des Produits pour Catalyse "PRO- CATALYSE", 1-4, avenue de Bois Préau, F-92500 Rueil- Malmaison (FR)

(72) Inventeur: Blanchard, Gilbert, 5, Allée des Acacias Lagny- le- Sec, F-60330 Le Plessis Belleville (FR)
Inventeur: Prigent, Michel, 11, rue des Marroniers, F-92500 Rueil- Malmaison (FR)

(74) Mandataire: Savina, Jacques, RHONE- POULENC INTERSERVICES Service Brevets Chimie 25, quai Paul Doumer, F-92408 Courbevoie Cédex (FR)

EP 0 145 584 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention concerne un procédé de fabrication d'un catalyseur pour la traitement des gaz d'échappement. Elle concerne plus particuliérement un procédé de fabrication d'un catalyseur comportant un support et une phase active constituée d'au moins un métal de la mine du platine et d'au moins un métal additionnel.

Généralement, les catalyseurs pour le traitement des gaz d'échappement des moteurs à combustion interne sont préparés en incorporant la phase active au support.

Il existe plusieurs procédés pour incorporer la phase active au support. On peut incorporer dans le support chaque métal pris individuellement ou tous les métaux ensemble par les techniques de coprécipitation, cogélification, échange ionique ou imprégnation.

On a maintenant constaté qu'on peut augmenter l'efficacité d'un catalyseur pour le traitement des gaz d'échappement, ainsi que sa durée de vie en incorporant de manière particulrère la phase active au support lors de la fabrication du catalyseur.

La présente invention concerne en effet un procédé pour le traitement des gaz d'échappement des moteurs à combustion interne à l'aide d'un catalyseur comportant une phase active constituée d'au moins un métal de la mine du platine et d'au moins un métal additionnel et un support obtenu par mélange d'un liant et d'une charge, ledit catalyseur étant fabriqué selon un procédé du type comportant les étapes suivantes:

1) mélange d'une charge, d'un liant et d'au moins une partie de la phase active,
2) mise en forme du mélange,
3) séchage et éventuellement calcination,
4) introduction de la partie de la phase active restante,
5) séchage puis activation caractérisé en ce que, lors du procédé de fabrication dudit catalyseur, la majeure partie, au moins 50% en poids, des métaux de la mine du platine et/ou la majeure partie des métaux additionnels sont introduits dans le liant lors de la première étape.

Les métaux de la mine du platine que l'on met en oeuvre selon le procédé de l'invention sont choisis parmi: le platine, le palladrum, l'iridrum, le rhodium, le ruthenrum, l'argent, l'or.

Selon des formulations catalytiques préférées selon le procédé de l'invention, on met en oeuvre les métaux de la mine du platine choisis parmi: le platine et éventuellement au moins un des métaux suivants: le palladium, l'iridium et le rhodium.

La teneur totale en métaux de la mine du platine des catalyseurs fabriqués selon le procédé de l'invention varie généralement entre 0,005 à 0,8 % en poids par rapport au catalyseur. Lorsque l'on met en oeuvre les formulations catalytiques préférées, la teneur en platine et éventuellement en palladium varie généralement entre 0,04 et 0,5 % en poids par rapport au catalyseur; et éventuellement celle en iridium et rhodium varie généralement entre 0,002 et 0,1 %.

Les métaux additionnels que l'on met en oeuvre selon le procédé de l'invention sont choisis parmi: le cobalt, le zinc, le manganèse, le nickel, le tungstène, l'yttrium, les lanthanides, le fer, le cuivre, le chrome, le zirconium, le molybdène, le rhénium, l'étain, le calcium, le strontium, le baryum et éventuellement les métaux de transition des premières, secondes et troisième colonnes de la classification périodique des éléments.

Selon des formulations catalytiques préférées selon le procédé de l'invention, on met en oeuvre les métaux additionnels choisis parmi: le cérium, le fer, le cuivre, le zirconium, l'yttrium. Selon des formulations catalytiques particulièrement préférées, on met en oeuvre le cérium et/ou le fer.

La teneur totale en métal additionnel des catalyseurs fabriqués selon le procédé de l'invention varie généralement entre 0,1 et 10 % en poids rapporté au catalyseur.

La première étape de mélange de la charge, du liant et d'une partie de la phase active selon le procédé de l'invention, se fait en ajoutant ladite partie de la phase active ou ses précurseurs lors da la fabrication du support. Lors de cette première étape on introduit la majeure partie des métaux de la mine du platine et/ou la majeure partie des métaux additionnels dans le liant.

Pour introduire la majeure partie des métaux de la mine du platine ou des métaux additionnels dans le liant, on opère par imprégnation ou mélange du liant avec lesdits métaux ou leurs précurseurs avant le mélange avec la charge.

On entend par majeure partie des métaux de la mine du platine ou des métaux additionnels au moins 50% et de préférence 70%, en poids de ces métaux par rapport respectivement au poids total des métaux de la mine du platine ou des métaux additionnels totaux qui sont introduits dans le catalyseur.

Lorsque l'on introduit la majeure partie des métaux de la mine du platine dans le liant, les métaux additionnels sont de préférence introduits lors de la première étape. Cette introduction des métaux additionnels est réalisée de telle façon que ceux-ci soient: ou en majeure partie dans le liant, ou en majeure partie dans la charge, ou à la fois dans le liant et dans la charge. L'introduction est réalisée par imprégnation ou mélange du liant et/ou de la charge avec les métaux désirés ou leurs précurseurs.

Lorsque l'on introduit la majeure partie des métaux additionnels dans le liant, les métaux de la mine du platine sont, de préférence, introduits lors de la quatrième étape par imprégnation du mélange mis en forme, séché et éventuellement calciné avec les métaux désirés ou leurs précurseurs.

Le liant et la charge constituant le support des catalyseurs selon l'invention peuvent être choisis parmi les composés et généralement les hydroxydes ou les oxydes d'aluminium, de sillcium, de titane, de zirconium, de magnésium, de calcium, de strontium, baryum, d'yttrium, de lanthanides, d'hafnium, de thorium, de niobium,

2

de tantale, de chrome, de molybdène, de tungstène. Selon un mode de mise en oeuvre préféré de l'invention, on utilise un liant d'hydroxyde ou d'oxyhydroxyde d'aluminium et une charge en oxyde d'aluminium.

On décrit ci-après les supports d'alumine obtenus par mélange d'un liant et d'une charge d'alumine.

Ces supports sont généralement préparés à partir d'une composition aqueuse d'alumine, comportant un liant qui constitue essentiellement la partie dispersée et une charge qui constitue essentiellement la partie non dispersée de la composition. Il convient que le taux de dispersion dans l'eau de la composition, résultant du mélange du liant et de la charge, soit compris entre 10 et 80 % et de préférence entre 15 et 60 %. Il peut convenir qu'en outre, la granulométrie de la partie non dispersée de la composition soit telle que le diamètre moyen des particules d'alumine qui la constitue est compris entre 1 et 15 microns (μm), au moins 70 % de ces particules ayant un diamètre compris entre la moitié du diamètre moyen et le double du diamètre moyen, ceci afin de conférer au support les caractéristiques de porosité désirées.

Le taux de dispersion est représenté par la proportion d'alumine qui reste en suspension colloïdale totale après que la composition ait été soumise à une centrifugation. On peut mesurer ce taux de dispersion de la façon suivante: la composition aqueuse d'alumine est diluée de façon à obtenir une concentration en alumine totale égale à 100g/l; 100 cm$^3$ de cette solution sont soumis à une agitation violente pendant 10 minutes; la solution est ensuite centrifugée pendant 10 minutes à la vitesse de 3000 tours par minute; on sépare la partie décantée de la partie non décantée constituée par une suspension colloïdale d'alumine; on calcine et on pèse la partie décantée, le taux de dispersion est exprimé comme étant le rapport entre la quantité totale initiale d'alumine de la composition moins la quantité d'alumine décantée sur la quantité totale initiale d'alumine de la composition.

La partie non dispersée de la composition est essentiellement constituée par la charge; une partie mineure de celle-ci peut provenir du liant.

La proportion en poids du liant dans la composition est comprise entre 10 et 80 % et de préférence entre 15 et 60 %. Il en résulte que la proportion en poids de la charge dans la composition est comprise entre 20 et 90 % et de préférence entre 40 et 85 %.

Dans les supports d'alumine mis en oeuvre selon l'invention, le liant d'alumine est constitué essentiellement d'une partie d'alumine dispersée et éventuellement d'une partie mineure d'alumine non dispersée; la partie dispersée représentant au moins 70 % en poids du liant. Dans la suite de cette description, on appellera liant la partie dispersée (même si tout le liant n'est pas dispersé) et charge la partie non dispersée (même si une partie de la charge, inférieure à 10 % en poids de la charge, est à l'état dispersé).

Le liant d'alumine mise en oeuvre doit être gélifiable ou coagulable par effet thermique ou chimique.

La gélification ou coagulation par effet thermique est bien connue de l'homme de l'art et peut être obtenue par évaporation de l'eau de la suspension ou de la dispersion aqueuse d'alumine formant le liant. La gélification ou coagulation par effet chimique est également bien connue de l'homme de l'art et peut être obtenua par augmentation du pH de la suspension ou de la dispersion aqueuse d'alumine formant le liant à une valeur supérieure à 9 qui correspond au point isoélectrique de l'alumine.

Les liants d'alumine que l'on peut mettre en oeuvre selon l'invention sont notamment les suspensions ou dispersions aqueuses de boehmites fines ou ultra-fines qui sont composées de particules ayant des dimensions dans le domaine colloïdal c'est-à-dire, inférieure à 2000 Å environ.

Les dispersions ou suspensions aqueuses de boehmites fines ou ultra-fines peuvent être obtenues ainsi qu'il est bien connu de l'homme de l'art par peptisation dans l'eau ou l'eau acidulée de ces produits. Les boehmites fines ou ultra-fines mises en oeuvre selon la présente invention peuvent notamment avoir été obtenues selon le procédé décrit dans les brevets français FR-A 1 262 182 et 1 381 282 ou dans la demande de brevet européen EP-A 15 196.

Le brevet français FR-A 1 262 182 décrit notamment un procédé de fabrication de boehmite fine ou ultra-fine par chauffage d'une dispersion aqueuse d'alumine en présence d'un radical d'acide monovalent, la dispersion aqueuse d'alumine ayant été obtenue à partie de chlorure basique d'aluminium, de nitrate basique d'aluminium, d'hydroxyde d'aluminium, de gel d'alumine ou de solutions colloïdales. Ce produit commercialisé par la Société du Pont de Nemours sous la marque Baymal, représente une boehmite fine ou ultra-fine fibrillaire dont la surface spécifique est généralement comprise entre 250 et 350 m$^2$/g.

Le brevet français FR-A 1 381 282, décrit notamment un procédé de fabrication de boehmite fine ou ultra-fine consistant à faire évoluer à une température comprise entre 60 et 150°C une suspension ou un gâteau de gel d'alumine hydratée amorphe contenant jusqu'à 35 % en poids d'alumine comptée en Al$_2$O$_3$, et par rapport à cette alumine comptée en molécules d'Al$_2$O$_3$, une quantité d'ions acides monovalents variant de 0,05 à 0,5, pendant un temps de 15 heures à 10 jours; le gâteau ayant été obtenu par essorage, lavage et filtration de gel d'alumine précipité en continu à un pH compris entre 8 et 9 à partir d'une solution d'aluminate de soude et d'acide nitrique. La surface spécifique de ces produits varie généralement entre 200 et 600 m$^2$/g.

La demandede brevet européen EP-A 15 196 décrit notamment un procédé de fabrication de boehmite au moins partiellement sous forme de boehmite ultra-fine par traitement dans un milieu aqueux ayant un pH inférieur à 9 d'une poudre d'alumine active obtenue par déshydratation rapide d'hydrargillite dans un courant de gaz chauds.

On peut également mettre en oeuvre comme liant d'alumine selon l'invention, les suspensions ou dispersions aqueuses obtenues à partir de pseudo-boehmite, de gels d'alumine amorphe, de gels d'hydroxyde d'aluminium ou d'hydrargillite ultra-fine.

La pseudo-boehmite peut notamment avoir été préparée selon le procédé décrit dans le brevet américain

3

US-A 3 630 670 par réaction d'une solution d'un aluminate alcalin avec une solution d'un acide minéral. Elle peut également avoir été préparée tel que décrit dans le brevet français FR-A 1 357 830 par précipitation à pH 9, à une température faiblement supérieure à l'ambiante à partir de réactifs de concentrations telles que l'on obtient environ 50g/l d'alumine dans la dispersion.

Les gels d'alumine amorphe peuvent notammant avoir été préparés selon les procédés décrits dans l'article "Alcoa paper n° 19 (1972) - pages 9 à 12" et notamment par réaction d'aluminate et d'acide, ou d'un sel d'aluminium et d'une base ou d'un aluminate et d'un sel d'aluminium ou par hydrolyse d'alcoolates d'aluminium ou par hydrolyse de sels basiques d'aluminium.

Les gels d'hydroxyde d'aluminium peuvent notamment être ceux qui ont été préparés selon les précédents décrits dans les brevets américains US-A 3 268 295 et 3 245 919.

L'hydrargillite ultra-fine peut notamment avoir été préparée selon le procédé décrit dans le brevet français FR-A 1 373 808, par évolution à une température comprise entre la température ambiante et 60°C de gels d'alumine sous forme de gâteau et contenant par rapport à l'alumine comptée en molécules d'$Al_2O_3$, 0,10 ions acides monovalents.

Dans les supports mis en oeuvre selon l'invention, la charge d'alumine est constituée essentiellement d'une partie d'alumine non dispersable et éventuellement d'une partie mineure d'alumine dispersable qui est dispersée dans la composition, la partie non dispersable représentant au moins 90 % en poids de la charge. Il peut être préférable que la granulométrie de la partie non dispersée de la composition, qui est donc essentiellement constituée par la charge, soit telle que le diamètre moyen des particules d'alumine qui la constitue, est compris entre 1 et 15 microns ($\mu$m), au moins 70 % de ces particules ayant un diamètre compris entre la moitié du diamètre moyen et le double du diamètre moyen.

La charge d'alumine mise en oeuvre peut être tout composé d'alumine présentant les caractéristiques qui ont été exposées ci-dessus. On peut en particulier, utiliser des composés hydratés d'alumine tels que: l'hydrargillite, la bayerite, la boehmite, la pseudo-boehmite et les gels d'alumine amorphe ou essentiellement amorphe. On peut également mettre en oeuvre les formes déshydratées ou partiellement déshydratées de ces composés qui sont constitués d'alumines de transition et qui comportent au moins une des phases prises dans le groupe constitué par rhô, chi, êta, gamma, kappa, thêta, delta, alpha.

En particulier, on pourra notamment utiliser des charges d'alumine obtenues selon l'un des procédés suivants, après éventuellement broyage et tamisage des particules:

- On précipite une solution aqueuse d'un sel d'aluminium par une solution d'un aluminate alcalin, on atomise le précipité obtenu puis on le remet en suspension dans une solution aqueuse ayant un pH compris entre 4,5 et 7, on atomise et on sèche la bouillie d'alumine obtenue, puis on lave, sèche et calcine le produit. (Procédé décrit dans le brevet US-A 3 520 654).

- Par précipitation d'un gel d'alumine à un pH compris entre 7,5 et 11, lavage, essorage, remise en suspension, déshydratation rapide du produit dans un courant de gaz chauds à une température d'entrée comprise entre environ 350 et 1000°C puis calcination. (Procédé décrit dans le brevet FR-A 2 221 405).

- Par précipitation d'un gel d'alumine à un pH compris entre 7 et 10,5, mûrissement du précipité à un pH compris entre 10 et 11, homogénéisation et atomisation à 250-550°C de la bouillie obtenue puis calcination. (Procédé décrit dans le brevet GB-A 888 772).

- Par précipitation d'un aluminate alcalin par un acide minéral à une température comprise entre 30 et 75°C, mûrissement dans un second réacteur à 35-70°C à un pH voisin de 7, recyclage de la bouillie obtenue dans le réacteur de mélange, filtration, lavage, séchage du produit par atomisation puis calcination. (Procédé décrit dans le brevet US-A 3 630 670).

- Par déshydratation rapide d'hydroxydes ou d'oxyhydroxydes d'aluminium et, plus particulièrement, d'hydrargillite dans un courant de gaz chauds; cette déshydratation étant opérée dans n'importe quel appareillage approprié à l'aide d'un courant de gaz chauds, la température d'entrée des gaz dans l'appareillage variant généralement de 400 à 1200°C environ, le temps de contact de l'hydroxyde ou de l'oxyhydroxyde avec les gaz chauds étant généralement compris entre une fraction de seconde et 4-5 secondes; un tel procédé de préparation de poudre d'alumine active a notamment été décrit dans le brevet français FR-A 1 108 011.

- Par traitement dans un milieu aqueux ayant un pH inférieur à 9 d'une poudre d'alumine active obtenue par déshydratation rapide d'hydrargillite dans un courant de gaz chauds, séchage par atomisation, puis, calcination. (Procédé décrit dans la demande de brevet européen EP-A 15 196).

Les charges d'alumine obtenues selon les divers procédés, peuvent se classer en deux groupes. Le premier groupe concerne les charges obtenues après séchage et éventuellement calcination qui présentent un certain taux de dispersion. Ces produits sont utilisables tels quels en tant que charges après éventuellement broyage et tamisage. Le deuxième groupe concerne les charges obtenues après séchage qui présentent un taux de dispersion inférieur à celui des charges du premier groupe. Ces charges nécessitent pour être mises en oeuvre, une étape de calcination à une température supérieure à 300°C, elles sont alors utilisables selon l'invention, après éventuellement broyage et tamisage.

Selon l'invention, les supports d'alumine peuvent être obtenus par mélange de la charge et du liant sous forme de poudres, le liant sous forme de poudre pouvant être constitué par les divers produits: boehmite, pseudo-boehmite, bayérite, gels d'alumine amorphe, gels d'hydroxyde d'aluminium, hydrargillite ultra-fine à l'état non peptisé. On met ensuite en contact, le mélange poudreux avec de l'eau ou de l'eau acidulée. Le mélange charge-liant-eau est réalisé de telle façon que le pH de la composition finale est inférieur à 4 et dans des proportions telles que le taux de dispersion de la composition finale, est compris entre 10 et 80 %.

Selon un autre mode de mise en oeuvre, on peut mélanger sous agitation la charge sous forme de poudre et le liant sous forme de suspension ou de dispersion d'alumine dans des proportions telles que le taux de dispersion de la composition soit compris entre 10 et 80 % et que le pH de la composition finale soit inférieur à 4.

La mise en forme du mélange du liant et de la charge d'alumine et de la partie de la phase active selon la deuxième étape du procédé de l'invention peut être effectuée par tout moyen convenable et par exemple: par extrusion, par la méthode dite du drageoir tournant (ou bol tournant, ou granulateur tournant...), par la méthode d'agglomération par pastillage, par la méthode dite de dégouttage dans l'huile ("oil-drop") et en particulier selon le procédé décrit dans la demande de brevet européen EP-A 15 801 ou par revêtement du mélange charge-liant sur un substrat métallique ou céramique et en particulier selon le procédé décrit dans la demande de brevet européen EP-A 73 703.

Selon la troisième étape du procédé de l'invention après la mise en forme du mélange on le sèche, la température de séchage est comprise entre environ 100 et 200°C. On effectue ensuite éventuellement une calcination à une température comprise entre 200 et 700°C.

Selon la quatrième étape du procédé de l'invention, on introduit alors la partie de la phase active restante.

Cette introduction est faite par imprégnation du mélange mis en forme, séché et éventuellement calciné, avec les métaux de la mine du platine et les métaux additionnels ou leurs précurseurs.

Selon la cinquième étape du procédé de l'invention, on opère le séchage du catalyseur obtenu puis son activation dans un courant d'air à une température comprise entre environ 300 et 800°C pendant quelques heures.

L'activation du catalyseur peut être avantageusement réalisée en atmosphère réductrice à une température comprise entre environ 200 et 700°C, on peut par exemple utiliser comme agents réducteurs l'hydrogène, l'oxyde de carbone et/ou l'hydrogène sulfuré.

Pour les formulations catalytiques préférées on décrit ci-après les mises en oeuvre préférées du procédé de l'invention. Ces formulations sont celles pour lesquelles les métaux de la mine du platine constituant la phase active, sont au moins un métal choisi parmi le platine, le palladium, l'iridium et le rhodium et celles pour lesquelles les métaux additionnels sont le cérium et/ou le fer et éventuellement au moins un métal choisi parmi le zirconium, le cuivre et l'yttrium.

Dans ce cas on introduit la majeure partie du cérium et/ou du fer et éventuellement du zirconium, du cuivre et de l'yttrium dans le liant au cours de la première étape.

Les métaux de la mine du platine choisis parmi le platine, l'iridium et le rhodium sont introduits dans la quatrième étape; le palladium pouvant être introduit lors de cette quatrième étape mais étant de préférence introduit lors de la première étape dans le liant.

Les divers composés qui servent à introduire les métaux dans le catalyseur peuvent être choisis parmi les composés minéraux ou organiques précurseurs desdits métaux.

Pour les formulations catalytiques préférées on utilisera de préférence comme composés du fer et/ou du cérium les sels de fer et/ou de cérium et, plus particulièrement, le nitrate ferrique, le citrate de fer ammoniacal, le chlorure ferrique et le nitrate céreux, l'acétate céreux, le chlorure céreux et le nitrate cérique ammoniacal, l'hydroxyde de cérium peptisable; comme composés du rhodium, du platine et du palladium que l'on peut mettre en oeuvre, on citera notamment le trichlorure de rhodium hydraté, l'acide chloroplatinique, le chlorure de palladium, le nitrate de palladium, ainsi que le dichlorure de rhodium III chloropentammime et les dichlorures de platine II et palladium II tétrammime.

Par ailleurs, ainsi qu'il est bien connu de l'homme de l'art, les supports mis en oeuvre selon le procédé de l'invention sont avantageusement traités de façon à leur conférer une bonne stabilité thermique au cours du temps. Ces traitements consistent notamment dans une stabilisation de l'oxyde ou du revêtement en oxyde constituant le support (en général l'oxyde d'aluminium) par les métaux alcalino-terreux, la silice et/ou les terres rares.

Les catalyseurs obtenus selon le procédé de l'invention présentent une efficacité et une durée de vie nettement améliorée pour le traitement des gaz d'échappement des moteurs à combustion interne et permettent d'éliminer la majeure partie de l'oxyde de carbone, des hydrocarbures brûlés et éventuellement les oxydes d'azote présents dans ces gaz.


**EXMPLE 1** - <u>PREPARATION D'UN CATALYSEUR (A) DE L'ART ANTERIEUR</u>

On prépare 100 g de billes d'alumine selon le procédé décrit dans la demande de brevet européen EP-A 15 801.

Ces billes présentent une surface spécifique de 100m²/g, un volume poreux total de 1,20cm³/g et un volume de 0,45cm³/g constitué par des macropores ayant un diamètre supérieur à 1000 Å (100 nm).

Ces billes sont imprégnées par 120cm³ d'une solution aqueuse de nitrate céreux, de nitrate ferrique et de nitrate cuivrique contenant 3,5 g de cérium, 1,0 g de fer et 0,5 g de cuivre.

Après 30 minutes de contact, les billes sont séchées à 150°C puis calcinées sous air à 550°C pendant 3 heures.

Elles sont ensuite imprégnées par 110cm$^3$ d'une solution d'acide hexachloroplatinique, de trichlorure de rhodium hydraté et de nitrate de palladium contenant 100mg de platine, 10mg de rhodium et 50mg de palladium.

Après 30 minutes de contact, les billes sont séchées à 150°C puis calcinées à 350°C pendant 3 heures dans un courant d'air circulant à 200 litres par heure.

Le catalyseur (A) ainsi préparé contient en poids rapporté au support 0,100% de platine, 0,010% de rhodium, 0,050% de palladium, 3,5% de cérium, 1,0% de fer et 0,5% de cuivre.

**EXEMPLE 2** - <u>PREPARATION D'UN CATALYSEUR (B) DE L'ART ANTERIEUR</u>

On prépare une suspension dans l'eau d'alumine selon le procédé décrit dans la demande de brevet européen EP-A 73 703. Cette suspension est utilisée pour le revêtement d'une structure monolithe céramique de 1,98 litre vendue par la société CORNING, présentant 400 cellules par Square Inch (62 cellules/cm$^2$); le monolithe de 1,98 litre est plongé dans la suspension à pH = 3,5 contenant 24% en poids d'alumine.

Le support précédemment cité est égoutté et séché pour que les canaux soient vidés, puis il est calciné à 600°C durant 3 heures. Le monolithe ainsi revêtu est immergé dans une solution aqueuse de nitrate de zirconyle et de nitrate de cérium pendant 30 minutes, puis il est égoutté et séché à 150°C et calciné à 550°C durant 3 heures. Les concentrations en nitrate de zirconyle et en nitrate de cérium dans la solution sont telles que, après immersion et calcination, le monolithe contient 3,0% en poids de zirconium et 2,0% en poids de cérium.

Le substrat est ensuite imprégné par trempage dans une solution aqueuse d'acide hexachloroplatinique.

La concentration en acide hexachloroplatinique est telle que le monolithe est imprégné par 1,5g de platine. Après 30 minutes de contact, le monolithe est égoutté, soufflé et séché à 150°C puis activé à 350°C pendant 3 heures dans un four de calcination.

Le catalyseur (B) ainsi préparé contient en poids rapporté au catalyseur monolithique: 0,150% de platine, 3,0% de zirconium et 2,0% de cérium.

**EXEMPLE 3** - <u>PREPARATION D'UN CATALYSEUR (C) DE L'ART ANTERIEUR</u>

On prépare une suspension dans l'eau d'alumine selon le procédé décrit dans la demande de brevet européen EP-A 73 703. A cette suspension d'alumine on ajoute une solution aqueuse de nitrate de cérium, de nitrate de zirconyle et d'acide silicique fraîchement préparé par échange sur résine DUOLITE C 464 d'une solution de silicate de sodium.

Les concentrations en nitrate de cérium, en nitrate de zirconyle et en acide silicique sont telles que la suspension contenant 20% en poids d'alumine contient en poids rapporté à l'alumine 8,0% de cérium, 4,0% de zirconium et 4% de silice. Cette suspension est utilisée pour le revêtement d'une structure monolithe céramique de 1,48 litre présentant 400 cellules par Square Inch (62 cellules/cm$^2$). Le monolithe est plongé dans la suspension à pH 3,5 puis il est égoutté, soufflé et séché pour que les canaux soient vidés, puis il est calciné à 600°C durant 3 heures.

Le substrat est ensuite imprégné par trempage dans une solution aqueuse d'acide hexachloroplatinique et de nitrate de palladium. Les concentrations en acide hexachloroplatinique et en nitrate de palladium sont telles que le monolithe de 0,64 kg est imprégné par 1,5 g de platine et 750 mg de palladium. Après 30 minutes de contact, le monolithe est égoutté, soufflé et séché à 150°C puis activé à 350°C pendant 3 heures dans un four de calcination.

Le catalyseur (C) ainsi préparé contient en poids rapporté au catalyseur monolithique 0,234% de platine, 0,117% de palladium, 1% de cérium, 0,5% de zirconium et 0,5% de silice.

**EXEMPLE 4** - <u>PREPARATION D'UN CATALYSEUR (D) DE L'ART ANTERIEUR</u>

On prépare une suspension dans l'eau d'alumine suivant le mode opératoire décrit dans l'exemple 3. On utilise cette fois une solution aqueuse de nitrate ferrique, de nitrate céreux et de nitrate d'yttrium contenant en poids rapporté à l'alumine 2,0% de fer, 5,0% de cérium et 0,01% d'yttrium.

Cette suspension est utilisée pour le revêtement d'une structure monolithe métallique fabriquée à partir d'une feuille métallique connue sous la marque FECRALLOY. La monolithe métallique de 1,2 litre est plongé dans la suspension à pH = 3,5 puis il est égoutté et séché pour que les canaux soient vidés puis il est calciné à 600°C durant 3 heures. Le substrat est ensuite imprégné par trempage dans une solution aqueuse d'acide hexachloroplatinique dont la concentration est telle que le monolithe de 1,6 kg est imprégné par 2,0 g de platine. Après 30 minutes de contact, le monolithe est égoutté, soufflé et séché à 150°C puis activé à 350°C pendant 3 heures dans un four de calcination. Le catalyseur (D) ainsi préparé contient en poids rapporté au catalyseur monolithique 0,125% de platine, 0,125% de fer, 0,375% de cérium et 0,000625% d'yttrium déposés sur le revêtement d'alumine.

## EXEMPLE 5 - PREPARATION D'UN CATALYSEUR (E) DE L'ART ANTERIEUR

On prépare une suspension dans l'eau d'alumine selon le procédé décrit dans la demande de brevet européen EP-A 73 703. A cette suspension d'alumine on ajoute une solution aqueuse de nitrate céreux et de nitrate ferrique.

Les concentrations en nitrate céreux et en nitrate ferrique sont telles que la suspension contenant 20% en poids d'alumine contient en poids rapporté à l'alumine 16,0% de cérium et 4,0% de fer. Cette suspension est utilisée pour le revêtement d'une structure monolithe céramique de 1,98 litre présentant 400 cellules par Square Inch (62 cellules/cm$^2$). Le monolithe est plongé dans la suspension à pH 3,5 puis il est égoutté, soufflé et séché pour que les canaux soient vidés, puis il est calciné à 600°C durant 3 heures.

Le substrat est ensuite imprégné par trempage dans une solution aqueuse d'acide hexachloroplatinique, de nitrate de palladium et de trichlorure de rhodium. Les concentrations en acide hexachloroplatinique en nitrate de palladium at en trichlorure de rhodium sont telles que le monolithe est imprégné par 750 mg de platine, 1 g de palladium et 75 mg de rhodium. Après 30 minutes de contact, le monolithe est égoutté, soufflé et séché à 150°C puis activé à 350°C pendant 3 heures dans un four de calcination.

Le catalyseur (E) ainsi préparé contient en poids rapporté au catalyseur monolithique 0,075% de platine, 0,1% de palladium, 0,0075 mg de rhodium, 2% de cérium et 0,5% de fer.

## EXEMPLE 6 - PREPARATION D'UN CATALYSEUR (F) SELON L'INVENTION

On prépare un sol de boehmites ultra-fines selon le procédé décrit dans la demande de brevet européen EP-A 15 801.

On procède à la fabrication d'un gâteau de gel d'alumine (I) par précipitation en continu d'une solution d'aluminate de sodium par une solution d'acide nitrique. Le gâteau de gel est essoré, filtré, lavé puis traité à 115°C pendant 24 heures dans un autoclave agité. Le produit obtenu se présente sous forme de pâte contenant 12% d'alumine comptée en $AL_2O_3$. La photographie de ce produit obtenue au microscope électronique montre qu'il est constitué de boehmite ultra-fine entièrement fibrillaire composée de monocristaux de dimension 500 à 1 000 Å (50 - 100 nm).

On prépare une alumine active par déshydratation rapide d'hydrargillite dans un réacteur à envolement à l'aide d'un courant de gaz chauds dont la température d'entrée est d'environ 800°C, le temps de contact est d'environ 1/2 seconde. Cette alumine présente une surface spécifique de 300 m$^2$/g, une perte au feu de 4%, le diagramme de rayon X montre qu'il s'agit d'une alumine de structure mal cristallisée présentant notamment des raies diffuses vers 2,40 Å et 1,40 Å (0,24 et 0,14 nm) communes aux alumines de transition gamma, êta, chi. La dimension des particules est telle que 70% ont un diamètre inférieur à 17 microns.

On introduit 500g d'alumine active dans un autoclave contenant 10 l d'une solution aqueuse d'acide nitrique présentant un pH de 0,85 de telle façon que le rapport molaire $\frac{NO_3}{Al_2O_3}$ soit égal à 0,3. L'autoclave est agité; on chauffe 8h à 130°C.

On obtient une suspension d'alumine contenant de la boehmite ultra-fine sous forme fibrillaire avec un taux de transformation d'environ 40%.

La suspension de boehmite fine obtenue est diluée et traitée par une solution ammoniacale de façon à amener son pH à environ 9.

L'examen au microscope électronique à transmission de cette suspension d'alumine montre qu'il s'agit, pour la partie cristallisée, de boehmite ultra-fine entièrement sous forme fibrillaire composée de lattes longues et étroites dont la longueur est d'environ 2 000 à 2 500 Å (200 à 250 nm) et dont les deux autres dimensions sont comprises entre environ 20 et 50 Å (2 et 5 nm).

On sèche la suspension d'alumine par atomisation dans un courant de gaz chauds à une température d'entrée comprise entre environ 700 et 800°C.

Les particules sphéroïdales (II) obtenues sont ensuite calcinées à 950°C, l'alumine est cristalliséa essentiellement dans la phase thêta. Le produit présente une surface spécifique de 110 m$^2$/g et un volume poreux de 0,60 cm$^3$/g. Sa granulométrie est telle que 50% des particules ont un diamètre Ø compris autour d'une valeur moyenne $Ø_M = 7$ microns ($\mu$m).

On imprègne 240 grammes de gel d'alumine (I) par une solution aqueuse de nitrate de palladium, de nitrate céreux, de nitrate ferrique et de nitrate cuivrique.

La suspension obtenue, qui constitue le gel d'alumine (III), est séchée par atomisation à 250°C afin de la mettre sous forme de poudre.

On mélange 240 g de gel d'alumine (III) dans 2 000 ml d'eau distillée, on agite pendant 10 minutes, puis on rajoute 760 g d'alumine sous forme de particules sphéroïdales (II).

On forme des gouttes de cette suspension 1 par l'intermédiaire de tubes calibrés présentant un diamètre intérieur d'environ 2,5 mm. Les gouttes tombent dans une colonne de 600 mm de diamètre contenant une couche de pétrole d'environ 6 centimètres flottant sur une solution ammoniacale de concentration d'environ 20 g/l. Le temps de séjour des particules dans la solution ammoniacale est d'environ 2 minutes. Les gouttes s'arrondissent dans le pétrole et gélifient dans la solution ammoniacale. Les billes recueillies sont très rigides et subissent sans déformation les opérations de transvasement, elles sont ensuite séchées et calcinées à 650°C pendant 1 heure.

100 g de billes sont ensuite imprégnées par 110 cm$^3$ d'une solution d'acide hexachloroplatinique et de trichlorure de rhodium hydrsté contenant 100 mg de platine et 10 mg de rhodium.

Après 30 minutes de contact, les billes sont séchées à 150°C puis calcinées à 350°C pendant 3 heures dans un courant d'air circulant à 200 litres par heure.

Le catalyseur (F) ainsi préparé contient en poids rapporté au support 0,100% de platine, 0,010% de rhodium, 0,050% de palladium, 3,5% de cérium, 1,0% de fer et 0,5% de cuivre.

## EXEMPLE 7 - PREPARATION D'UN CATALYSEUR (G) SELON L'INVENTION

On prépare un liant et une charge d'alumine selon le procédé décrit dans la demande de brevet européen EP-A 73 703.

On prépare un liant d'alumine (I) de la façon suivante: 5000 g d'alumine obtenus par des hydratations d'hydrargillite dans un courant de gaz chaud à 800°C, pendant 0,5 secondes, sont introduits dans un autoclave contenant une solution d'acide nitrique à pH = 1. On chauffe la suspension en l'agitant pendant 4 heures à 180°C. La suspension obtenue, qui constitue le liant d'alumine (I), est séchée par atomisation, à 150°C afin de le mettre sous forme de poudre; cette poudre présente aux rayons X une structure de boehmite fibrillaire.

Une partie de cette poudre est calcinée sous air à 600°C pendant 2 heures pour obtenir la charge d'alumine (II).

Le liant et la charge présentent les taux de dispersion suivants:
TAUX DE DISPERSION
Liant d'alumine (I) 75 %
Charge d'alumine (II) 5 %

On imprègne 300 grammes du liant d'alumine (I) par une solution aqueuse de nitrate de cérium et de nitrate de zirconyle contenant 20 g de cérium et 30 g de zirconium. La suspension obtenue, qui constitue le liant d'alumine (III), est séchée par atomisation à 250°C afin de la mettre sous forme de poudre. On disperse le liant d'alumine (III) sous forme de poudre dans 2000 cm$^3$ d'eau distillée, on agite pendant 10 minutes puis on rajoute 700 g de charge d'alumine (II), on agite encore pendant 10 minutes.

Le taux de dispersion de la composition obtenue est de 24% et sa viscosité de 65 centipoises.

Cette suspension (II) est utilisée pour le revêtement d'une structure monolithe céramique de 1,98 litre présentant 400 cellules par Square Inch (62 cellules/cm$^2$). Le monolithe est plongé dans la suspension à pH = 3,5. Le support précédemment cité est égoutté, soufflé et séché pour que les canaux soient vidés, puis il est calciné à 600°C durant 3 heures.

Le substrat est ensuite imprégné par trempage dans une solution aqueuse d'acide hexachloroplatinique. La concentration en acide hexachloroplatinique est telle que le monolithe est imprégné par 1,5 g de platine. Après 30 minutes de contact, le monolithe est égoutté, soufflé et séché à 150°C puis activé à 350°C pendant 3 heures dans un cour de calcination.

Le catalyseur (G) ainsi préparé contient en poids rapporté au catalyseur monolithique: 0,150% de platine, 2% de cérium et 3% de zirconium.

## EXEMPLE 8 - PREPARATION D'UN CATALYSEUR (H) SELON L'INVENTION

On imprègne 300g de liant (I) préparé de la façon décrite dans l'exemple 7, par une solution aqueuse de nitrate de palladium et de nitrate céreux contenant 1,17 g de palladium et 10 g de cérium. La suspension obtenue, qui constitue le liant d'alumine (IV) est séchée par atomisation à 250°C afin de la mettre sous forme de poudre.

On prépare une charge d'alumine (V) de la façon suivante: on prépare 1 kg de billes d'alumine de structure gamma préparées selon les procédés décrits dans les brevets français FR-A 1 449 904 et 1 386 364 par autoclavage en présence d'acide d'agglomérés d'alumine active, séchage et calcination. Ces billes d'alumine obtenues présentent une surface spécifique de 100 m$^2$/g, un volume poreux total de 0,90 cm$^3$/g et un volume de 0,40 cm$^3$/g constitué par des macropores ayant un diamètre supérieur à 1000 Å. Ces billes sont imprégnées par 900 cm$^3$ d'une solution aquause de nitrate de zirconyle et d'acide silicique contenant 71,4 g de zirconium et 71,4 g de silice.

Après 30 minutes de contact les billes sont séchées à 150°C puis calcinées sous air à 600°C pendant 3 heures.

Elles sont ensuite broyées pendant une heure dans un broyeur à boulets.

Les caractéristiques de la charge d'alumine (V) obtenue son les suivantes:
. Taux de dispersion: 5%
. Répartition granulométrique: le diamètre moyen des particules est de 7 microns (μm).

On disperse 300 g de liant d'alumine (IV) sous forme de poudre dans 2000 cm³ d'eau distillée, on agite pendant 10 minutes, puis on rajoute 700 g de charge d'alumine (V), on agite encore pendant 10 minutes. Le taux de dispersion de la composition obtenue est de 25% et sa viscosité de 70 centipoises.

Cette suspension (III) est utilisée pour le revêtement d'une structure monolithe céramique de 1,48 litres présentant 400 cellules par Square Inch (62 cellules/cm²). Le monolithe est plongé dans la suspension à pH = 3,5 puis il est égoutté, soufflé et séché pour que les canaux soient vidés, puis il est calciné à 600°C durant 3 heures.

Le substrat est ensuite imprégné par trempage dans une solution aqueuse d'acide hexachloroplatinique dont la concentration est telle que le monolithe (0,64 kg) est imprégné par 1,5 g de platine. Après 30 minutes de contact, le monolithe est égoutté, soufflé et séché à 150°C puis activé à 350°C pendant 3 heures dans un four de calcination.

Le catalyseur (H) ainsi préparé contient en poids rapporté au catalysaur monolithique 0,234% de platine, 0,117% de palladium, 1% de cérium, 0,5% de zirconium et 0,5% de silice.

## EXEMPLE 9 - PREPARATION D'UN CATALYSEUR (I) SELON L'INVENTION

On imprègne 300 g de liant (VI) préparé de la façon décrite dans l'exemple 7, par une solution aqueuse de nitrate céreux et d'acide hexachloroplatinique contenant 50 g de cérium et 16,66 g de platine. La suspension obtenue qui constitue le liant d'alumine (VI), est séchée par atomisation à 250°C afin de la mettre sous forme de poudre.

On prépare une charge d'alumine VII de la façon suivante: on imprègne 1 kg de billes d'alumine active ayant une surface spécifique de 250 m²/g et un volume poreux total de 0,55 cm³/g, par 550 cm³ d'une solution de nitrate ferrique et de nitrate d'yttrium contenant 26,3 g de fer et 0,1315 g d'yttrium. Après 30 minutes de contact, les billes sont séchées à 150°C puis calcinées sous air à 600°C pendant 3 heures. Elles sont ensuite broyées pendant une heure dans un broyeur à boulets. Les caractéristiques de la charge d'alumine (VII) obtenue sont les suivantes:
. Taux de dispersion: 4%
. Répartition granulométrique: le diamètre moyen des particules est de 13 microns, (μm).

On disperse 300 g de liant d'alumine (VI) sous forme de poudre dans 2000 cm³ d'eau distillée, on agite pendant 10 minutes, puis on rajoute 700 g de charge d'alumine (VII), on agite encore pendant 10 minutes. Le taux de dispersion de la composition obtenue est de 22% et sa viscosité de 60 centipoises.

Cette suspension (IV) est utilisée pour le revêtement d'une structure monolithe métallique de 1,2 litre fabriqué à partir d'une feuille métallique connue sous la marque FECRALLOY. Le monolithe est plongé dans la suspension à pH = 3,5 puis il est égoutté, soufflé et séché pour que les canaux soient vidés, puis il est calciné à 500°C durant 3 heures.

Le catalyseur (I) ainsi préparé contient en poids rapporté au catalyseur monolithique 0,125% de platine, 0,125% de fer, 0,375% de cérium et 0,000625% d'yttrium déposée sur le revêtement d'alumine.

## EXEMPLE 10 -PREPARATION D'UN CATALYSEUR (J) SELON L'INVENTION

On imprègne 300 g de liant préparé de la façon décrite dans l'exemple 7 par une solution aqueuse de nitrate de palladium, de nitrate céreux et de nitrate ferrique contenant 10 g de palladium, 50 g de cérium et 25 g de fer. La suspension obtenue, qui constitue le liant d'alumine (VIII) est séchée par atomisation à 250°C afin de la mettre sous forme de poudre.

On prépare une charge d'alumine (IX) de la façon suivante: on prépare 1 kg de billes d'alumine de structure gamma préparées selon les procédés décrits dans les brevets français FR-A 1 449 904 et 1 386 364 par autoclavage en présence d'acide d'agglomérés d'alumine active, séchage et calcination. Ces billes d'alumine obtenues présentent une surface spécifique de 100 m²/g, un volume poreux total de 0,90 cm³/g et un volume de 0,40 cm³/g, un volume des macropores ayant un diamètre supérieur à 1000Å (100 nm). Ces billes sont imprégnées par 900 cm³ d'une solution aqueuse de nitrate céreux et de nitrate ferrique contenant 150 g de cérium et 25 g de fer.

Après 30 minutes de contact les billes sont séchées à 150°C puis calcinées sous air à 600°C pendant 3 heures.

Elles sont ensuite broyées pendant une heure dans un broyeur à boulets.

Les caractéristiques de la charge d'alumine (V) obtenue sont les suivantes:
. Taux de dispersion : 5%
. Répartition granulométrique: le diamètre moyen des particules est de 7 microns (μm).

On disperse 300g de liant d'alumine (VIII) sous forme de poudre dans 2000 cm³ d'eau distillée, on agite pendant 10 minutes, puis on rajoute 700 g de charge d'alumine (IX), on agite encore pendant 10 minutes. Le taux de dispersion de la composition obtenue est de 25% et sa viscosité de 70 centipoises.

Cette suspension (X) est utilisée pour le revêtement d'une structure monolithe céramique de 1,98 litre présentant 400 cellules par Square Inch (62 cellules/cm²). Le monolithe est plongé dans la suspension à pH = 3,5 puis il est égoutté, soufflé et séché pour que les canaux soient vidés, puis il est calciné à 600°C durant 3 heures.

Le substrat est ensuite imprégné par trempage dans une solution aqueuse d'acide hexachloroplatinique et de trichlorure de rhodium dont les concentrations sont telles que le monolithe est imprégné par 750 mg de platine et 75 mg de rhodium. Après 30 minutes de contact, le monolithe est égoutté, soufflé et séché à 150°C puis activé à 350°C pendant 3 heures dans un four de calcination.

Le catalyseur (J) ainsi préparé contient en poids rapporté au catalyseur monolithique 0,075% de platine, 1,0% de palladium, 0,0075% de rhodium, 2% de cérium et 0,5% de far.

**EXEMPLE 11 - ACTIVITE INITIALE DES CATALYSEURS A, E, F ET J POUR**

**LL'ELIMINATION SIMULTANEE DU MONOXYDE DE CARBONE, DES HYDROCARBURES IMBRULES ET DES OXYDES D'AZOTE DANS LES GAZ D'ECHAPPEMENT D'UN VEHICULE.**

Le véhicule utilisé pour ces essais est une Renault 18 type USA équipée d'un moteur de 1647 cm³ muni d'une alimentation par injection d'essence de marque BOSCH L-JETRONIC, régulée grâce à une sonde à oxygène et marchant avec de l'essence sans plomb.

La mesure des émissions de ce véhicule a été effectuée sur un banc à rouleaux selon la procédure CVS-C/H conformément aux normes fédérales américaines. Les émissions de base du véhicule sans pot catalytique sont les suivantes:

CO = 15,1 g/mile HC = 2,9 g/mile NO$_x$ = 4,9 g/mile (1 mile = 1,61 km)

Pour l'essai des catalyseurs en billes, un pot catalytique expérimental du type à circulation radiale d'une volume de 1700 cm³ réalisé selon le principe décrit dans le brevet français n° 74 06395 (FR-A 22 70444) a été adapté sur la ligne d'échappement à une distance d'environ 1,60 m du moteur. Les catalyseurs sur monolithes ont été montés dans des enveloppes métalliques soudées et installées sur la ligne d'échappement à une distance d'environ 0,80 m du moteur, à l'emplacement prévu à l'origine par le constructeur du véhicule.

Le tableau 1 ci-dessous rassemble les résultats obtenus avec les catalyseurs A, E, F et J décrits dans les exemples 1, 5, 6 et 10, après une stabilisation préalable effectuée en faisant rouler le véhicule 80 km sur route la veille de l'essai.

**TABLEAU I**

|  | Numéro de l'exemple | Référence du catalyseur | Emission g/mile (g/1.61 km) | | |
|---|---|---|---|---|---|
|  |  |  | CO | HC | NO$_x$ |
| Art antérieur | 1 | A | 2,55 | 0,59 | 0,72 |
|  | 5 | E | 2,44 | 0,55 | 0,77 |
| Invention | 6 | F | 1,95 | 0,37 | 0,44 |
|  | 10 | J | 1,88 | 0,29 | 0,46 |

On peut constater que l'activité catalytique des catalyseurs préparés selon l'invention est, dans tous les cas, supérieure à celle des catalyseurs préparés selon l'art antérieur.

**EXEMPLE 12 - ACTIVITE INITIALE DES CATALYSEURS B, C, D, G, H et I**

**POUR L'OXYDATION DU MONOXYDE DE CARBONE ET DES HYDROCARBURES IMBRULES DANS LE GAZ D'ECHAPPEMENT D'UN VEHICULE**

Le véhicule utilisé pour ces essais est une Renault 20 équipée d'un moteur de 1995 cm³ de cylindrée muni d'un recyclage de gaz d'échappement et d'un système de clapots Pulsair pour l'appoint d'air secondaire dans les gaz d'échappement et marchant avec de l'essence sans plomb. La mesure des émissions de ce véhicule a été effectuée sur un banc à rouleaux selon la procédure CVS-C:H conformément aux normes fédérales américaines.

Les émissions de base du véhicule sans pot catalytique mais avec injection d'air secondaire en action sont les suivantes:

CO = 28,7 g/mile (17,8 g/km)
HC = 2,9 g/mile (1,8 g/km)
$NO_x$ = 2,6 g/mile (1,6 g/km)

Pour les essais, les catalyseurs ont été placés dans des enveloppes métalliques soudées et montés sur la ligne d'échappement à une distance d'environ 1,10 m du moteur.

Le tableau II ci-dessous rassemble les résultats obtenus avec les catalyseurs B, C, D, G, H et I décrits dans les exemples 2, 3, 4, 7, 8 et 9.

**TABLEAU II**

| | Numéro de l'exemple | Référence du catalyseur | Emission g/mile (g/1.61 km) | |
|---|---|---|---|---|
| | | | CO | HC |
| Art antérieur | 2 | B | 2,53 | 0,27 |
| | 3 | C | 2,03 | 0,19 |
| | 4 | D | 2,47 | 0,22 |
| Invention | 7 | G | 2,11 | 0,23 |
| | 8 | H | 1,76 | 0,14 |
| | 9 | I | 2,24 | 0,18 |

On peut constater que l'activité catalytique des catalyseurs préparés selon l'invention est, dans tous les cas, supérieure à celle des catalyseurs préparés selon l'art antérieur.

**EXEMPLE 13** - TENUE EN ENDURANCE DES CATALYSEURS A, E, F et

J POUR L'ELIMINATION SIMULTANEE DU MONOXYDE DE CARBONE, DES HYDROCARBURES IMBRULES ET DES OXYDES D'AZOTE DANS LES GAZ D'ECHAPPEMENT D'UN MOTEUR FONCTIONNANT A LA RICHESSE 1 SUR UN BANC D'ESSAIS

Le moteur utilisé pour ces essais est un moteur Renault 18 type USA d'une cylindrée de 1647 $cm^3$ muni d'une alimentation par injection d'essence de marque BOSCH L-JETRONIC régulée à la richesse 1 grâce à une sonde à oxygène placée en sortie du collecteur d'échappement.

Le carburant consommé par le moteur dans ces essais est de l'essence sans plomb contenant toutefois une teneur résiduelle en plomb ajustée dans tous les cas à 0,013 g/litre.

Le moteur étant accouplé à un frein dynamométrique, le régime de rotation et la charge imposés au moteur sont réglés de manière à avoir un débit de gaz d'échappement de 85 $m^3$/h (à température et pression normale) et une température en entrée du pot catalytique de 475 ± 10°C.

Des pots catalytiques similaires à ceux utilisés dans l'exemple 10 et contenant les catalyseurs A, E, F et J décrits dans les exemples 1, 5, 6 et 10 sont adaptés successivement sur la ligne d'échappement du moteur.

La mesure du taux d'élimination de chacun des trois polluants est effectuée périodiquement par l'analyse des gaz en amont et en aval des pots.

Le tableau III ci-dessous rassemble les résultats obtenus au départ de l'essai et après 600 heures de marche.

On peut constater que la stabilité de l'activité des catalyseurs préparés selon l'invention est sensiblement améliorée par rapport à celle des catalyseurs préparés selon l'art antérieur.

**TABLEAU III**

| | Numéro de l'exemple | Référence du catalyseur | Epuration initiale (%) | | | Epuration après 600h (%) | | |
|---|---|---|---|---|---|---|---|---|
| | | | CO | HC | NO$_x$ | CO | HC | NO$_x$ |
| Art antérieur | 1 | A | 96,5 | 95 | 89 | 89,7 | 86 | 81,4 |
| | 5 | E | 97,0 | 95 | 91 | 87,8 | 84 | 79,8 |
| Invention | 6 | F | 98,5 | 97,3 | 91,8 | 93,7 | 90,1 | 86,6 |
| | 10 | J | 97,7 | 96,7 | 93 | 92,5 | 88,2 | 85,8 |

## EXEMPLE 13 - TENUE EN ENDURANCE DES CATALYSEURS B, C, D, G, H ET I

POUR L'OXYDATION DU MONOXYDE DE CARBONE ET DES HYDROCARBURES IMBRULES DANS LES GAZ D'ECHAPPEMENT D'UN MOTEUR SUR BANC D'ESSAIS

Le moteur utilisé pour ces essais est un moteur Renault R20 type 843/20 de cylindrée totale 1647 cm$^3$, équipé d'une alimentation en air secondaire par des clapots Pulsair.

Le carburant consommé par le moteur dans ces essais est de l'essence sans plomb contenant toutefois une teneur résiduelle en plomb ajustée dans tous les cas à 0,013 g/litre. Le moteur étant accouplé à un frein dynamométrique, le régime de rotation et la charge imposés au moteur sont réglés de manière à avoir un débit de gaz d'échappement de 85 m$^3$/h (à température et pression normale) et une température en entrée pot catalytique de 475 $\pm$ 10°C.

Les réglages de carburation et d'allumage sont ceux préconisés par le constructeur.

Des pots catalytiques similaires à ceux utilisés dans l'exemple 11 et contenant les catalyseurs B, C, D, G, H et I décrits dans les exemples 2, 3, 4, 7, 8 et 9 sont adaptés successivement sur la ligne d'échappement du moteur.

La mesure du taux d'élimination du monoxyde de carbone et des hydrocarbures imbrûlés est effectuée périodiquement par l'analyse des gaz en amont et en aval des pots.

Le tableau III ci-dessous rassemble les résultats obtenus au départ de l'essai et après 800 heures de marche.

**TABLEAU IV**

| | Numéro de l'exemple | Référence du catalyseur | Epuration initiale (%) | | Epuration après 800h (%) | |
|---|---|---|---|---|---|---|
| | | | CO | HC | CO | HC |
| Art antérieur | 2 | B | 98,6 | 89,3 | 84,5 | 76,7 |
| | 3 | C | 96,8 | 94,2 | 83,6 | 83,1 |
| | 4 | D | 97,9 | 91,5 | 82,5 | 76,8 |
| Invention | 7 | G | 99,9 | 98,6 | 92,1 | 91,3 |
| | 8 | H | 98,3 | 96,4 | 88,6 | 87,8 |
| | 9 | I | 99,2 | 98,2 | 87,9 | 89,9 |

On peut constater que la stabilité de l'activité des catalyseurs préparés selon l'invention est sensiblement améliorée par rapport à celle des catalyseurs préparés selon l'art antérieur.

**Revendications**

1) Procédé pour le traitement des gaz d'échappement des moteurs à combustion interne à l'aide d'un catalyseur comportant une phase active constituée d'au moins un métal de la mine du platine et d'au moins un métal additionnel et un support obtenu par mélange d'un liant et d'une charge, ledit catalyseur étant fabriqué selon un procédé du type comportant les étapes suivantes:
1) mélange d'une charge, d'un liant et d'au moins une partie de la phase active,
2) mise en forme du mélange,
3) séchage et éventuellement calcination,
4) introduction de la partie de la phase active restante,
5) séchage puis activation
caractérisé en ce que, lors du procédé de fabrication dudit catalyseur, la majeure partie, au moins 50% en poids, des métaux de la mine du platine et/ou la majeure partie des métaux additionnels sont introduits dans le liant lors de la première étape.

2) Procédé selon la revendication 1 caractérisé en ce que les métaux de la mine du platine ou les métaux additionnels sont introduits dans le liant par imprégnation ou mélange du liant avec lesdits métaux ou leurs précurseurs avant le mélange avec la charge.

3) Procédé selon la revendication, 1 caractérisé en ce que, lorsque l'on introduit la majeure partie des métaux de la mine du platine dans le liant, les métaux additionnels sont introduits lors de la première étape, l'introduction des métaux additionnels étant réalisée de telle façon que ceux-ci soient, ou en majeure partie dans le liant, ou en majeure partie dans la charge ou à la fois dans le liant et dans la charge; l'introduction étant réalisée par imprégnation ou mélange du liant et/ou de la charge avec les métaux désirés ou leurs précurseurs.

4) Procédé selon la revendication 1 caractérisé en ce que, lorsque l'on introduit la majeure partie des métaux additionnels dans le liant, les métaux de la mine du platine sont introduits lors de la quatrième étape par imprégnation du mélange mis en forme, séché et éventuellement calciné avec les métaux désirés ou leurs précurseurs.

5) Procédé selon l'une quelconque des revendications précédentes caractérisé en ce que le liant et la charge sont choisis parmi les hydroxydes ou les oxydes d'aluminium, de silicium, de titane, de zirconium, de magnésium, de calcium, de strontium, de baryum, d'yttrium, de lanthanides, d'hafnium, de thorium, de niobium, de tantale, de chrome, de molybdène, de tungstène, la proportion de liant par rapport à la charge étant comprise entre 10 et 80% et de préférence 15 et 60%.

6) Procédé selon l'une quelconque des revendications précédentes caractérisé en ce que le métal de la mine du platine est choisi parmi: le platine, le palladium, l'iridium, le rhodium, le ruthénium, l'argent, l'or et en ce que la teneur totale en métal de la mine du platine du catalyseur est comprise entre 0,005 et 0,8% en poids par rapport au catalyseur.

7) Procédé selon l'une quelconque des revendications précédentes caractérisé en ce que le métal additionnel est choisi parmi: le cobalt, le zinc, le manganèse, le nickel, le tungstène, l'yttrium, les lanthanides, le fer, le cuivre, le rhénium, le chrome, le zirconium, le molybdène, l'étain, le calcium, le strontium, le baryum et en ce que la teneur totale en métal additionnel du catalyseur est comprise entre 0,1 et 10% en poids par rapport au catalyseur.

8) Procédé selon les revendications 1, 2, 4, 5, 6, 7 caractérisé en ce que la phase active est constituée par au moins un métal de la mine du platine choisi parmi le platine, le palladium, l'iridium et le rhodium et au moins un métal additionnel choisi parmi le cérium, le fer, le zirconium, le cuivre, l'yttrium; le cérium, le fer, le zirconium, le cuivre et/ou l'yttrium sont introduits dans le liant lors de la première étape et le platine, l'iridium et/ou le rhodium sont introduits lors de la quatrième étape, le palladium étant introduit soit lors de la première étape dans le liant, soit lors de la quatrième étape.

**Patentansprüche**

1. Verfahren zur Behandlung der Auspuffabgase eines Verbrennungsmotors mit Hilfe eines Katalysators, der eine aktive Phase aus mindestens einem Platinmetall, mindestens einem zusätzlichen Metall und einem durch Mischen eines Bindemittels und eines Füllstoffs erhaltenen Träger aufweist, wobei der Katalysator nach einem Verfahren mit den folgenden Schritten hergestellt wird:
1. Mischen des Füllstoffs, des Bindemittels und mindestens eines Teils der aktiven Phase
2. Formgebung des Gemischs
3. Trocknung und eventuelle Kalzinierung
4. Zugabe des restlichen Teils der aktiven Phase
5. Trocknung und schließlich Aktivierung dadurch gekennzeichnet, daß während des Herstellungsverfahrens des genannten Katalysators der größere Anteil, mindestens aber 50 Gew.%, der Platinmetalle und/oder der größere Teil der zusätzlichen Metalle dem Bindemittel während des ersten Schritts zugegeben werden.

2. Verfahren nach Anspruch 1, dadurch gekennzeichnet, daß die Platinmetalle oder die zusätzlichen Metalle dem Bindemittel durch Tränkung oder Mischung des Bindemittels mit den genannten Metallen oder ihren Vorstufen zugegeben werden, bevor die Zugabe des Füllstoffs erfolgt.

3. Verfahren nach Anspruch 1, dadurch gekennzeichnet, daß die zusätzlichen Metalle während des ersten Schritts zugegeben werden, wenn man den größten Teil der Platinmetalle dem Bindemittel zugibt, wobei die Zugabe der zusätzlichen Metalle in der Weise erfolgt, daß diese entweder zum überwiegenden Teil dem Bindemittel, oder zum überwiegenden Teil dem Füllstoff oder aber gleichzeitig dem Bindemittel und dem Füllstoff zugegeben werden, wobei die Zugabe durch Tränken oder Mischen des Bindemittels und/oder des Füllstoffs mit den gewünschten Metallen oder deren Vorstufen erfolgt.

4. Verfahren nach Anspruch 1, dadurch gekennzeichnet, daß die Platinmetalle während des vierten Schritts durch Tränken der Mischung nach deren Formgebung, Trocknung und evtl. Kalzinierung mit den gewünschten Metallen oder deren Vorstufen erfolgt, wenn man den überwiegenden Teil der zusätzlichen Metalle dem Bindemittel zugibt.

5. Verfahren nach einem der vorhergehenden Ansprüche, dadurch gekennzeichnet, daß das Bindemittel und der Füllstoff aus der Gruppe der Hydroxide oder Oxide des Aluminiums, Siliciums, Titans, Zirkoniums, Magnesiums, Calciums, Strontiums, Bariums, Yttriums, der Lanthanide, des Hafniums, Thoriums, Niobs, Tantals, Chroms, Molybdäns, Wolframs, ausgewählt werden, wobei der Anteil des Bindemittels im Verhältnis zum Füllstoff zwischen 10 und 80 %, vorzugsweise zwischen 15 und 60 % liegt.

6. Verfahren nach einem der vorhergehenden Ansprüche, dadurch gekennzeichnet, daß das Platinmetall entweder Platin, Palladium, Iridium, Rhodium, Ruthenium, Silber oder Gold ist, und daß der Gesamtanteil an Platinmetall des Katalysators zwischen 0,005 und 0,8 Gew.% bezogen auf das Gewicht des Katalysators liegt.

7. Verfahren nach einem der vorhergehenden Ansprüche, dadurch gekennzeichnet, daß das zusätzliche Metall entweder Kobalt, Zink, Mangan, Nickel, Wolfram, Yttrium, ein Lanthanid, Eisen, Kupfer, Rhenium, Chrom, Zirkonium, Molybdän, Zinn, Calcium, Strontium oder Barium ist, und daß der Gesamtanteil des zusätzlichen Metalls am Katalysator zwischen 0,1 und 10 % bezogen auf das Gewicht des Katalysators beträgt.

8. Verfahren nach einem der Ansprüche 1, 2, 4, 5, 6 oder 7, dadurch gekennzeichnet, daß sich die aktive Phase aus mindestens einem Platinmetall, das entweder Platin, Palladium, Iridium oder Rhodium ist, und mindestens einem zusätzlichen Metall zusammensetzt, das entweder Cer, Eisen, Zirkonium, Kupfer oder Yttrium ist, wobei Cer, Eisen, Zirkonium, Kupfer und/oder Yttrium dem Bindemittel während des ersten Schritts zugegeben werden und Platin, Iridium und/oder Rhodium während des vierten Schritts zugegeben werden, und wobei das Palladium entweder während des ersten Schritts dem Bindemittel zugegeben wird oder während des vierten Schritts.

## Claims

1. Process for the treatment of exhaust gases from internal combustion engines using a catalyst comprising an active phase consisting of at least one platinum ore metal and at least one additional metal and a carrier obtained by mixing a binder and a filler, the said catalyst being manufactured according to a process of the type comprising the following stages:
1) mixing a filler, a binder and at least one part of the active phase,
2) shaping the mixture,
3) drying and, if required, calcination,
4) introduction of the remaining part of the active phase,
5) drying followed by activation
characterized in that, during the process of manufacturing the said catalyst, the major part, at least 50% by weight, of the platinum ore metals and/or the major part of the additional metals are introduced into the binder during the first stage.

2. Process according to claim 1, characterized in that the platinum ore metals or the additional metals are introduced into the binder by impregnating or mixing the binder with the said metals or their precursors before mixing with the filler.

3. Process according to claim 1, characterized in that, when the major part of the platinum ore metals are introduced into the binder, the additional metals are introduced during the first stage, the introduction of the additional metals being carried out so that these are, either mainly in the binder or mainly in the filler or in the binder and in the filler at the same time; the introduction being carried out by impregnating or mixing the binder and/or the filler with the desired metals or their precursors.

4. Process according to claim 1, characterized in that, when the major part of the additional metals are introduced into the binder, the platinum ore metals are introduced during the fourth stage by impregnating the mixture which is shaped, dried, and, if required, calcined, with the desired metals or their precursors.

5. Process according to any one of the previous claims, characterized in that the binder and the filler are chosen from the hydroxides or oxides of aluminium, silicon, titanium, zirconium, magnesium, calcium, strontium, barium, yttrium, lanthanides, hafnium, thorium, niobium, tantalum, chromium, molybdenum and tungsten, the proportion of the binder relative to the filler being between 10 and 80%, and preferably between 15 and 60%.

6. Process according to any one of the previous claims, characterized in that the platinum ore metal is chosen from: platinum, palladium, iridium, rhodium, ruthenium, silver and gold and in that the total platinum ore metal content of the catalyst is between 0.005 and 0.8% by weight relative to the catalyst.

7. Process according to any one of the previous claims, characterized in that the additional metal is chosen from: cobalt, zinc, manganese, nickel, tungsten, yttrium, lanthanides, iron, copper, rhenium, chromium, zirconium, molybdenum, tin, calcium, strontium and barium and in that the total additional metal content of the catalyst is between 0.1 and 10% by weight relative to the catalyst.

8. Process according to claims 1, 2, 4, 5, 6, 7, characterized in that the active phase consists of at least one platinum ore metal chosen from platinum, palladium, iridium and rhodium and at least one additional metal chosen from cerium, iron, zirconium, copper and yttrium; cerium, iron, zirconium, copper and/or yttrium are introduced into the binder during the first stage and platinum, iridium and/or rhodium are introduced during the fourth stage, palladium being introduced either during the first stage into the binder or during the fourth stage.